# EUROPÄISCHE PATENTANMELDUNG

(11) **EP 0 939 284 A2**
(43) Veröffentlichungstag der Anmeldung: **01.09.1999**
(21) Anmeldenummer: 99100763.4
(22) Anmeldetag: 16.01.1999
(51) Int. Cl.: F24H 8/00

(54) **Gerät zum Erwärmen von Wasser, insbesondere Warmwasserheizkessel**

(30) Priorität: 26.02.1998 DE 19808006; 29.10.1998 DE 19849860
(71) Anmelder: Vetter, Richard, D-31226 Peine (DE)
(72) Erfinder: Vetter, Richard, D-31226 Peine (DE)
(74) Vertreter: Depmeyer, Lothar

(57) **Zusammenfassung**

Die Erfindung geht aus von einem Gerät zum Erwärmen von Wasser, insb. jedoch von einem Warmwasserheizkessel, mit einer Verbrennungskammer (5) im Oberteil des Gerätes und darunter befindlichen Wärmetauschern (7), wobei sich unten im Gerät eine Sammelwanne (13) für das Kondensat und ferner eine Neutralisationseinrichtung (16) für das Kondensat befindet, der auch das in der Abgasleitung anfallende Kondensat zugeleitet wird. Um die bekannten Schubladen für die Neutralisationseinrichtung (16) als ausserhalb des Gerät befindliche Vorrichtung überflüssig zu machen, ist erfindungsgemäss die Neutralisationseinrichtung (16) innerhalb der Sammelwanne (13) angeordnet.

## Beschreibung

Die Erfindung betrifft ein Gerät zum Erwärmen von Wasser, insb. Warmwasserheizkessel, mit einer Verbrennungskammer im Oberteil des Gerätes und darunter befindlichen Wärmetauschern, wobei sich unterhalb eines unten gelegenen Wärmetauschers eine Sammelwanne für das im Gerät anfallende Kondensat und ferner eine Neutralisationseinrichtung für das Kondensat befindet, der auch das in der Abgasleitung des Gerätes anfallende Kondensat zuführbar ist.

Bei den bekannten Geräten dieser Art befindet sich die Neutralisationseinrichtung unterhalb der Sammelwanne für das Kondensat; diese Einrichtung ist als Schublade ausgeführt, die das der Neutralisation dienende Mittel aufnimmt und von der Vorderseite des Gerätes her bedienbar ist. Das in der Sammelwanne anfallende Kondensat steht dabei über einen Überlauf bzw. einen damit zusammenwirkenden Geruchverschluss mit dem Behälter für die Neutralisation in Verbindung.

Die Erfindung geht von der Erkenntnis aus, dass die bekannten, schnell herausziehbaren und wieder einführbaren Schubladen einen besonderen Aufwand darstellen, zumal sie einen eigenen Aufnahmeraum haben müssen. Zudem erfordern sie im Regelfalle eine zusätzliche Abdeckung und einen eigenen Abfluss für das neutralisierte Medium. Es versteht sich, dass unter diesen Voraussetzungen auch ein erhöhter Platzbedarf erforderlich wird.

Der Erfindung liegt die Aufgabe zugrunde, die erwähnten Nachteile zu vermeiden, um so auf eine Schublade verzichten zu können.

Zur Lösung dieser Aufgabe ist erfindungsgemäss die Neutralisationseinrichtung innerhalb der Sammelwanne angeordnet. Für die Neutralisationseinrichtung wird somit nicht mehr ein zusätzlicher Raum bzw. eine ausserhalb des Gerätes befindliche Vorrichtung benötigt, vielmehr wird das Vorhandensein einer Sammelwanne ausgenutzt, um einerseits das Kondensat zu sammeln und andererseits die erwünschte Neutralisation herbeizuführen.

Zweckmässigerweise wird dabei unterhalb des ganz unten im Gerät liegenden Wärmetauschers ein Leitblech angeordnet, das das Kondensat mit Vorteil im wesentlichen an die Stelle innerhalb des Gerätes leitet, an der auch das aus der Abgasleitung kommende Kondensat anfällt.

Das aus dem Gerät und der Abgasleitung kommende Kondensat wird dann durch die Neutralisationseinrichtung geführt und kann dann vorzugsweise an der Seite ggfs. über einen Geruchverschluss abgeleitet werden, die der Abgasleitung an der Rückseite des Gerätes gegenüberliegt.

Weitere Einzelheiten der Erfindung werden anhand der Zeichnung erläutert, in der Ausführungsbeispiele der Erfindung dargestellt sind. Es zeigen :
- Fig. 1: einen senkrechten Teilschnitt durch einen schematisch wiedergegebenen Warmwasserheizkessel und
- Fig. 2: einen abgewandelten Kessel in Teilseitenansicht, ebenfalls im Teilschnitt.

In einem im wesentlichen quaderförmigen, meist gut isolierten Gehäuse 1 mit Vorderwand 2, Rückwand 3 und Boden 4 befindet sich im Oberteil die Verbrennungskammer 5 mit einem durch Gas oder Öl betriebenen Brenner 6. Die Verbrennungskammer 5 befindet sich insg. in einem Wärmetauscher 7, dem das kalte Wasser bei 8 zugeführt wird. Bei 9 wird das erwärmte Wasser abgezogen.

Unterhalb des Wärmetauschers 7 ist ein weiterer Wärmetauscher 10 montiert, dem Verbrennungsluft bei 11 zugeleitet wird. Die erwärmte Luft gelangt über eine Leitung 12 zum Brenner 6, der in bekannter Weise über ein Gebläse verfügt.

Das Innere des Gerätes wird nach unten durch eine Kondensatkammer 13 abgeschlossen. In dieser befindet sich ein schräg nach hinten unten zur Rückwand 3 hin gerichtetes Leitblech 14 für das sich im Gerät ansammelnde Kondensat. Das Leitblech 14 hat im Bereich der Rückwand 3 eine Ausnehmung 15, durch die das Kondensat nach unten in die Neutralisationseinrichtung 16 abfliessen kann.

Diese Einrichtung wird nach unten hin vom Boden 4 begrenzt, jedoch erstrecken sich wechselseitig vom Boden 4 einerseits und vom Leitblech 14 andererseits wechselseitig senkrechte Wände 16', um so das Kondensat durch das durch eine Schraffur angedeutete Neutralisationsmittel - meist ein Granulat - durch dieses Mittel hindurchzuführen.

Im Bereich der Vorderwand 2 des Gerätes ist im Boden 4 eine Aussparung 4' vorgesehen, von der aus das neutralisierte Kondensat ggfs. über einen Geruchverschluss einer Abflussleitung zugeführt werden kann, die mit 17 bezeichnet ist. Dabei ist es zweckmässig, bei der in Strömumgsrichtung des Kondensats vorne liegende Abteilung 18 und die unterhalb der Aussparung 16 befindliche Abteilung 19 von Neutralisationsmitteln freizuhalten.

Da sich der Austritt 2o der Abgase nahe oberhalb der Ausnehmung 15 befindet, kann auch das in der Abgasleitung anfallende Kondensat der Neutralisationseinrichtung 16 im Sinne des Pfeiles 21 zugeleitet und im übrigen so behandelt werden wie das im Gerät anfallende Kondensat.

Die vorerwähnte Einrichtung ist über die meist entfernbaren bzw. klappbaren Seitenwände des Gerätes zugänglich.

Die erfindungsgemässe Anordnung und Ausbildung der Neutralisationseinrichtung 16 hat den Vorteil, dass sich besondere Vorrichtungen ausserhalb des Gehäuses 1 erübrigen. Zudem ergibt sich eine Platzersparnis und ggfs. eine bessere Reaktion des Neutralisationsmittels innerhalb des warmen Gehäuses 1.

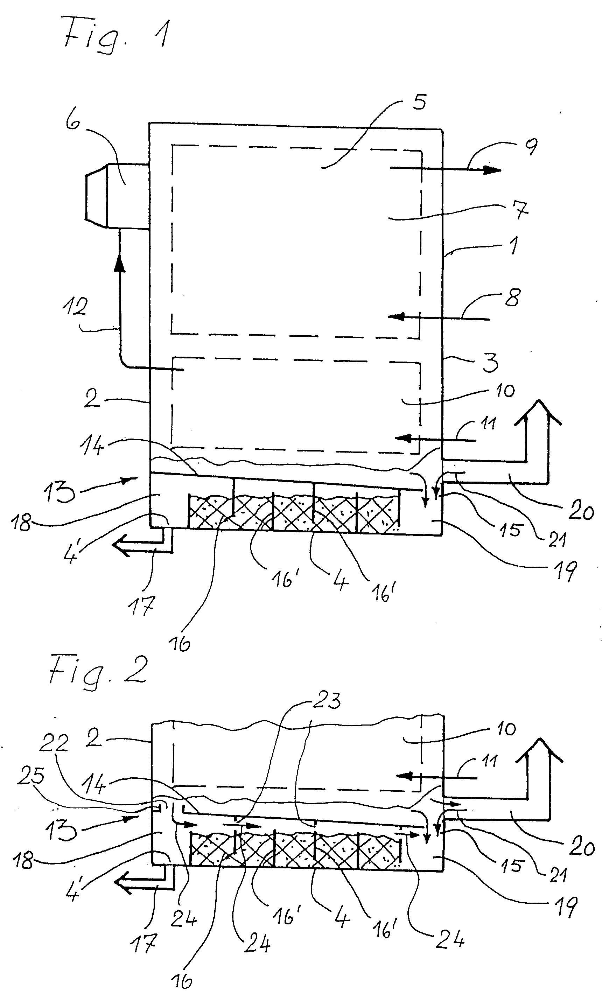

Bei der Ausführung gemäss Fig. 1 weist das Leitblech 14 nur an seinem der Rückwand 3 bzw. dem Austritt 20 zugekehrten Ende eine Ausnehmung 15 auf, durch die das vom Leitblech 14 kommende Kondensat nach unten hin abfliessen kann. Demgegenüber ist gemäss Fig. 2 vorgesehen, auch an dem Endbereich des Leitbleches 14 eine Durchbrechung 22 anzuordnen, der dem Austritt 20 bzw. der Ausnehmung 15 abgekehrt ist. Die Durchbrechung 22 hat dabei die Aufgabe, einen Teil der Abgase in die zur Aufnahme der Neutralisationsmittel dienende Kammer, insb. in die Abteilung 18 einzuleiten. Da die dort eingeleiteten Abgase wegen eines Geruchverschlusses nicht in die Abflussleitung 17 eindringen können, streichen sie über die Neutralisationseinrichtung 16, wozu die Wände 16' Löcher 23 erhalten. Der Teilfluss der Abgase ist mit den Pfeilen 24 angezeigt. Die beiden Ströme der Abgase haben den Vorteil, dass sich insg. die Geschwindigkeit der Abgase verringert und zudem auch noch eine zusätzliche AbKühlung des unten gelegenen Teilstromes eintritt. Dadurch wird die Kondensation verbessert.

Um zu verhindern, dass über die Durchbrechung 22 Kondensat unmittelbar in die Abteilung 18 gelangen kann, ist es zweckmässig, wenn die Durchbrechung 22 von einem umlaufenden, nach oben gerichteten Kragen 25 umschlossen ist, der gewissermassen einen Abschlussdeich bildet.

## Patentansprüche

1. Gerät zum Erwärmen von Wasser, insb. Warmwasserheizkessel, mit einer Verbrennungskammer im Oberteil des Gerätes und darunter befindlichen Wärmetauschern, wobei sich unterhalb eines unten gelegenen Wärmetauschers eine Sammelwanne für das im Gerät anfallende Kondensat und ferner eine Neutralisationseinrichtung für das Kondensat befinden, der auch das in der Abgasleitung anfallende Kondensat zuführbar ist, dadurch gekennzeichnet, dass die Neutralisationseinrichtung (16) in der Sammelwanne ( Kondensatkammer 13 ) angeordnet ist.

2. Gerät nach Anspruch 1, dadurch gekennzeichnet, dass oberhalb der Neutralisationseinrichtung (16) ein Leitblech (14) für das Kondensat angeordnet ist, durch das das Kondensat in den Bereich der Stelle des Gehäuese (1) für das Gerät geleitet wird, an der die Abgase das Gehäuse (1) verlassen.

3. Gerät nach Anspruch 1 und 2, dadurch gekennzeichnet, dass das Leitblech (14) zur Rückwand (3) des Gehäuses (1) abfällt, durch die die Abgase abgeführt werden.

4. Gerät nach Anspruch 1, dadurch gekennzeichnet, dass die Neutralisationseinrichtung (16) wechselseitig vom Boden des Gehäuses (1) und vom Leitblech (14) ausgehende Wandungen (16') aufweist, zwischen denen das Neutralisationsmittel angeordnet ist.

5. Gerät nach Anspruch 4, dadurch gekennzeichnet, dass von den Wandungen (16') Abteilungen gebildet sind, wobei die erste und die letzte Abteilung (18,19) von Neutralisationsmitteln praktisch frei ist.

6. Gerät nach Anspruch 3, dadurch gekennzeichnet, dass sich der Auslauf (17) für das neutralisierte Kondensat im Bereich der Vorderwand ( 2) des Gehäuses (1) für das Gerät befindet.

7. Gerät nach Anspruch 1 und 2, dadurch gekennzeichnet, dass das Leitblech (14) in dem Endbereich eine Durchbrechung (22) für Abgase aufweist, der der Abgasableitstelle abgekehrt ist.

8. Gerät nach Anspruch 7, dadurch gekennzeichnet, dass die durch die Durchbrechung (22) geführten Abgase über die Neutralisationseinrichtung (16) durch das Leitblech (14) zum Austritt (20) der Abgase aus dem Gerät leitbar sind.

9. Gerät nach Anspruch 7, dadurch gekennzeichnet, dass die Durchbrechung von einem umlaufenden, nach oben gerichteten Kragen (25) umschlossen ist.

10. Gerät nach Anspruch 7, dadurch gekennzeichnet, dass bei geneigter Anordnung des Leitbleches (14) sich die Durchbrechung praktisch an der höchsten Stelle des Leitbleches (14) befindet.

11. Gerät nach Anspruch 7 und 8, dadurch gekennzeichnet, dass ein Teil der Abgase oberhalb und ein anderer Teil der Abgase unterhalb des Leitbleches (14) zum Austritt (20) der Abgase geführt ist.
